# FASCICULE DE BREVET EUROPEEN

(11) **EP 1 430 741 B1**
(45) Date de publication et mention de la délivrance du brevet: **12.03.2014**
(21) Numéro de dépôt: 02777417.3
(22) Date de dépôt: 11.09.2002
(51) Int. Cl.: H04W 48/18

(54) **PROCEDE DE TRANSMISSION DE DONNEES MULTI-RESEAUX**
VERFAHREN ZUR MEHRFACHNETZWERKDATENÜBERTRAGUNG
METHOD FOR MULTI-NETWORK DATA TRANSMISSION

(30) Priorité: 24.09.2001 FR 0112345
(43) Date de publication de la demande: 23.06.2004
(73) Titulaire: Apple Inc., Cupertino, CA 95014 (US)
(72) Inventeur: CHARBONNIER, Philippe, F-78600 Le-Mesnil-le-Roi (FR)
(74) Mandataire: Lang, Johannes
(86) Numéro de dépôt international: PCT/FR2002/003084
(87) Numéro de publication internationale: WO 2003/028397

(56) Documents cités:
- WO-A-01/50788
- WO-A-01/62034

## Description

La présente invention concerne un procédé de transmission de données destiné à mettre en communication un réseau de communication, sélectionné parmi une pluralité de tels réseaux, avec au moins un émetteur/récepteur mobile, lesdits réseaux de communication possédant chacun des caractéristiques propres et différentes d'un réseau à un autre.

De tels procédés sont par exemple couramment utilisés pour permettre à des radiotéléphones bi-modes de communiquer avec, au choix, un premier réseau de type GSM ou un deuxième réseau de type DCS1800. Dans cet exemple, les technologies des premier et deuxième réseaux sont toutes deux cellulaires et suffisamment semblables pour que le passage d'un réseau à un autre ne nécessite que des aménagements mineurs de l'émetteur/récepteur, comme une reprogrammation de gammes de fréquences d'oscillation au sein de syntoniseurs d'émission et de réception.

L'émetteur/récepteur peut cependant être placé dans des environnements multi-réseaux où les réseaux en présence possèdent des caractéristiques très différentes d'un réseau à un autre, comme c'est le cas pour des réseaux cellulaires de type UMTS, satellitaires de type IRIDIUM ou GLOBALSTAR, ou locaux de types DECT ou WLAN.

Dans certains cas, un émetteur/récepteur mobile se trouvant dans un environnement multi-réseaux pourra avoir avantage à commuter d'un réseau à un autre, par exemple en cas de saturation du réseau avec lequel il est connecté, ou si un autre réseau lui permet de réaliser des économies en termes de coût de transmission ou de batterie, voir par exemple le document WO-A1-01/62034.

L'invention est liée aux considérations suivantes :

Une même cellule d'un premier réseau de type cellulaire peut par exemple inclure une ou plusieurs zones dans lesquelles un ou plusieurs réseaux locaux associés, distincts du premier réseau, sont opérationnels. Un émetteur/récepteur mobile, configuré pour communiquer avec le premier réseau, qui entrerait dans une telle zone et serait muni des équipements adéquats pourrait commuter vers le réseau local afin d'en exploiter des capacités plus avantageuses. L'émetteur/récepteur mobile concerné devra toutefois avoir été averti par avance de l'existence même d'une telle possibilité.

Une information sur les diverses zones incluses dans la cellule dans lesquelles d'autres réseaux de communication sont opérationnels pourrait être envoyée en permanence à tous les émetteurs/récepteurs mobiles tributaires de ladite cellule, mais une telle mesure provoquerait une augmentation significative du volume de communications au sein de la cellule, qui pourrait engendrer une saturation de ladite cellule si le nombre d'émetteurs/récepteurs qui y sont présents est important.

La présente invention a pour but de remédier dans une large mesure à cet inconvénient en proposant un procédé de transmission de données grâce auquel un émetteur/récepteur se trouvant dans une zone où plusieurs réseaux de communication sont opérationnels peut en être averti sans qu'une telle mesure ne provoque d'augmentation significative du volume de communication pour le réseau avec lequel ledit émetteur/récepteur est en communication.

En effet, selon l'invention, un procédé de transmission de données conforme au paragraphe introductif inclut :
- une étape de localisation et d'identification d'un émetteur/récepteur rendu apte par sa situation géographique à communiquer avec au moins deux réseaux de communication différents, et
- une étape de transmission, à un émetteur/récepteur identifié à l'issue de l'étape de localisation et d'identification, de caractéristiques propres à des réseaux de communication opérationnels dans le lieu où ledit émetteur/récepteur a été localisé.

Le procédé selon l'invention permet de sélectionner, parmi tous les émetteurs/récepteurs inclus dans une même cellule, pour reprendre l'exemple précédent, les seuls émetteurs/récepteurs qui se trouvent dans des zones où d'autres réseaux, avec lesquels ils sont capables de communiquer, sont opérationnels. Un message d'information pourra alors être adressé de façon sélective aux émetteurs/récepteurs ainsi sélectionnés, ce qui aura pour effet de ne pas perturber les autres émetteurs/récepteurs présents dans la cellule.

Cet avantage prend une dimension encore plus importante dans une application du procédé selon l'invention à un ensemble de cellules d'un réseau de communication, ensemble au sein duquel seraient disséminées des zones dans lesquelles au moins un autre réseau de communication serait opérationnel.

Grâce à l'étape de transmission des caractéristiques propres aux réseaux de communication opérationnels dans le lieu où il a été localisé, l'émetteur/récepteur identifié peut être informé, en temps réel et au fil de ses mouvements, des diverses possibilités qui lui sont offertes à l'intérieur de la zone dans laquelle il se trouve.

Selon une variante de l'invention, le procédé décrit plus haut pourra inclure une étape d'analyse de configuration de l'émetteur/récepteur identifié à l'issue de l'étape de localisation et d'identification, et une étape d'évaluation d'une possible adéquation de ladite configuration avec les caractéristiques propres à des réseaux de communication opérationnels dans le lieu où ledit émetteur/récepteur a été localisé.

L'émetteur/récepteur identifié peut alors évaluer son aptitude à utiliser le ou les réseaux de communication alternatifs qui lui ont été ainsi décrits.

En effet, si lesdits réseaux de communication sont très différents les uns des autres, l'émetteur/récepteur peut ne pas être capable de s'adapter immédiatement aux caractéristiques propres à un réseau alternatif. Par exemple, un déploiement d'une antenne spécifique peut être nécessaire à une mise en adéquation avec ledit réseau, ou un chargement d'un module matériel ou logiciel, ou encore une manifestation d'acceptation de la part d'un utilisateur de l'émetteur/récepteur d'une nouvelle grille tarifaire.

Selon une autre variante de l'invention, qui peut être avantageusement utilisée cumulativement avec la variante précédemment décrite, un procédé de transmission tel que décrit plus haut pourra inclure une étape d'adaptation de configuration de l'émetteur/récepteur identifié à l'issue de l'étape de localisation et d'identification, laquelle étape d'adaptation est destinée à mettre ledit émetteur/récepteur en adéquation avec au moins un réseau de communication opérationnel dans le lieu où ledit émetteur/récepteur a été localisé et distinct d'un réseau avec lequel l'émetteur/récepteur est déjà en adéquation.

Une telle étape peut être mise en oeuvre de manière sélective, par exemple à l'issue d'une étape d'évaluation évoquée plus haut, ou de manière systématique, sans tenir compte de la configuration antérieure de l'émetteur/récepteur identifié comme étant apte à communiquer avec le nouveau réseau.

L'étape de localisation et d'identification peut être implémentée de différentes manières. L'émetteur/récepteur mobile pourra par exemple faire l'objet d'une radiodétection par triangulation de la part de stations de base d'au moins un réseau de communication terrestre ou de satellites. Une telle radiodétection produira des coordonnées de l'émetteur/récepteur qui seront comparées avec des contours prédéterminés des zones dans lesquelles les différents réseaux de communication sont opérationnels. Si les coordonnées d'un émetteur/récepteur mobile sont incluses dans une surface définie par un tel contour, ledit émetteur/récepteur sera identifié comme apte à communiquer avec le réseau correspondant.

Dans une de ses applications, l'invention concerne également un système de télécommunication incluant au moins un émetteur/récepteur mobile destiné à être mis en communication avec un réseau de communication sélectionné parmi une pluralité de tels réseaux, lesdits réseaux de communication possédant chacun des caractéristiques propres et différentes d'un réseau à un autre, système caractérisé en ce qu'il inclut :
- des moyens de localisation et d'identification d'un émetteur/récepteur rendu apte par sa situation géographique à communiquer avec au moins deux réseaux de communication différents, et
- des moyens de transmission destinés à transmettre à un émetteur/récepteur identifié par les moyens de localisation et d'identification des caractéristiques propres à des réseaux de communication opérationnels dans le lieu où ledit émetteur/récepteur a été localisé.

Dans une variante de cette application de l'invention, le système décrit ci-dessus pourra inclure des moyens d'analyse de configuration de l'émetteur/récepteur identifié à l'issue de l'étape de localisation et d'identification, et une étape d'évaluation d'une possible adéquation de ladite configuration avec les caractéristiques propres à des réseaux de communication opérationnels dans le lieu où ledit émetteur/récepteur a été localisé.

Dans une autre variante de l'application de l'invention décrite plus haut, le système de télécommunication sera en outre muni de moyens d'adaptation de configuration de l'émetteur/récepteur identifié à l'issue de l'étape de localisation et d'identification, lesquels moyens d'adaptation sont destinés à mettre ledit émetteur/récepteur en adéquation avec au moins un réseau de communication opérationnel dans le lieu où ledit émetteur/récepteur a été localisé et distinct d'un réseau avec lequel l'émetteur/récepteur est déjà en adéquation.

Les moyens de localisation et d'identification pourront par ailleurs inclure des stations de base appartenant à un ou plusieurs réseaux de télécommunication terrestres, ou encore des satellites, pour déterminer par triangulation une position de l'émetteur/récepteur.

L'invention porte également sur un radiotéléphone tel que défini par la revendication 10.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig.1 est un schéma décrivant un système de télécommunication selon un mode de mise en oeuvre de l'invention,
la Fig.2 est un schéma décrivant une variante d'un tel système de télécommunication,
la Fig.3 est un organigramme décrivant un procédé de transmission de données mis en oeuvre dans de tels systèmes, et
la Fig.4 est un schéma fonctionnel décrivant un mode de réalisation possible d'un radiotéléphone apte à être mis en oeuvre dans des systèmes ou procédés précédemment représentés.

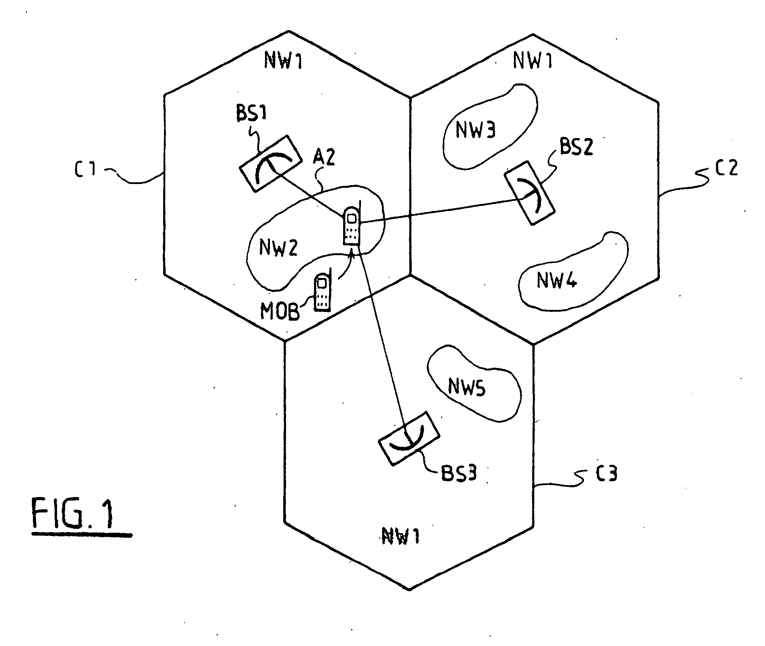

La Fig.1 représente schématiquement un système de télécommunication dans lequel l'invention est mise en oeuvre. Dans cet exemple, le système inclut un premier réseau de communication cellulaire NW1 qui présente une première, une deuxième et une troisième cellule C1, C2 et C3, munies chacune d'une station de base BS1, BS2 et BS3. Un deuxième réseau de communication NW2 est opérationnel dans un périmètre associé à la première cellule C1, un troisième et un quatrième réseau de communication NW3 et NW4 étant opérationnels dans un périmètre associé à la deuxième cellule C2 et un cinquième réseau de communication NW5 étant opérationnel dans un périmètre associé à la troisième cellule C3. Dans le cas de figure décrit ici, les deuxième, troisième, quatrième et cinquième réseaux de communication sont des réseaux locaux, par exemple de type DECT ou WLAN. Dans d'autres cas de figure, n'importe lequel de ces réseaux peut être de dimension régionale, voire globale et couvrir une, plusieurs, voire la totalité des territoires couverts par les cellules du premier réseau de communication NW1.

Le système de télécommunication décrit ici inclut en outre un émetteur/récepteur mobile MOB, représenté sous la forme d'un radiotéléphone, mais qui peut être aussi un organiseur personnel ou n'importe quel objet portable, pourvu qu'il soit muni de fonctionnalités d'émission et de réception. Au cours d'un de ses déplacements, représenté sur la figure par une flèche de direction, ledit mobile MOB entre dans une zone où, outre le premier réseau de communication NW1, le deuxième réseau de communication NW2 est opérationnel. Cet événement est détecté par une infrastructure de gestion des réseaux de communication. En effet, la position de l'émetteur/récepteur mobile MOB est déterminée en continu par ladite infrastructure au moyen d'une triangulation réalisée par les stations de base BS1, BS2 et BS3 des cellules C1, C2 et C3. Chacune de ces stations identifie une direction suivant laquelle un signal reçu depuis l'émetteur/récepteur mobile MOB présente une puissance maximum ou minimum. L'infrastructure détermine un point de convergence entre les directions ainsi identifiées et en déduit des coordonnées de l'émetteur/récepteur mobile MOB. Ces coordonnées sont comparées avec des contours prédéterminés des zones dans lesquelles les différents réseaux de communication NW2, NW3, NW4 et NW5 sont opérationnels. Les coordonnées de l'émetteur/récepteur mobile MOB étant incluses dans une surface A2 définie par un tel contour, ledit émetteur/récepteur MOB est identifié comme apte à communiquer avec le réseau NW2 correspondant.

L'infrastructure peut alors adresser un message d'information de façon sélective à l'émetteur/récepteur ainsi identifié, ce qui aura pour effet de ne pas perturber d'autres émetteurs/récepteurs présents dans la cellule C1.

Dans l'exemple décrit précédemment, trois stations de base d'un même réseau de communication cellulaire sont utilisées pour réaliser une localisation de l'émetteur/récepteur mobile MOB par radiodétection. Dans d'autres modes de mise en oeuvre de l'invention, on pourra n'utiliser à cet effet que deux stations de base, voire une seule si celle-ci est apte à identifier, outre une direction suivant laquelle un signal reçu depuis l'émetteur/récepteur mobile MOB présente une puissance maximum, une atténuation temporelle dudit signal en fonction d'une distance séparant l'émetteur/récepteur mobile MOB de la station de base considérée. Il est également envisageable d'utiliser des stations de base appartenant à différents réseaux de communication, pour peu que chacune de ces stations communique avec une infrastructure de gestion commune apte à compiler les informations provenant des différentes stations de base.

On pourra en outre utiliser des mesures de temps nécessaire à un signal émis par l'émetteur/récepteur mobile MOB pour atteindre différentes stations de base, ou encore de temps nécessaire à des signaux émis de manière synchrone par des stations de base pour atteindre l'émetteur/récepteur mobile MOB, lequel communiquera alors à l'infrastructure des valeurs d'écarts temporels qu'il aura mesurés. On peut également envisager de combiner des mesures de niveaux de puissance et de temps.

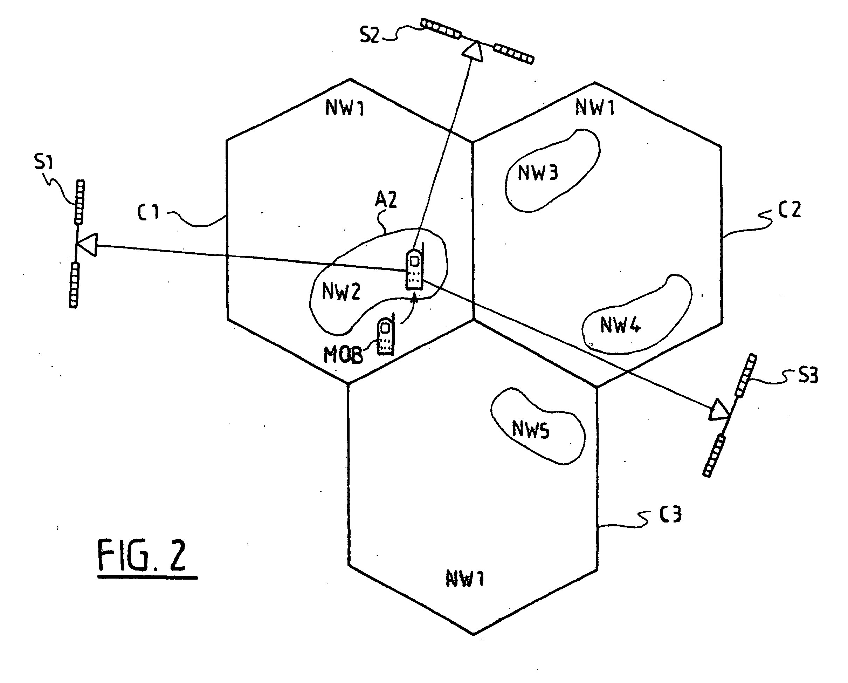

La Fig.2 représente schématiquement une variante d'un système de télécommunication tel que décrit ci-dessus, dans lequel l'étape de localisation et d'identification est réalisée au moyen de satellites placés en orbite autour du corps céleste, par exemple la Terre, à la surface duquel l'émetteur/récepteur mobile MOB est destiné à se mouvoir. Les éléments de ce système de télécommunication qui sont communs avec celui représenté à la figure précédente ont été munis des mêmes références et ne seront pas à nouveau décrits ici.

Dans cet exemple, la position de l'émetteur/récepteur mobile MOB est déterminée par l'infrastructure au moyen d'une triangulation réalisée par des premier, deuxième et troisième satellites S1, S2 et S3. Ces satellites peuvent appartenir à un réseau de communication avec lequel l'émetteur/récepteur mobile MOB est en communication, auquel cas ledit réseau localise l'émetteur/récepteur mobile MOB selon des techniques de mesure temporelles et/ou de puissance évoquées plus haut. Les satellites S1, S2 et S3 peuvent aussi appartenir à un autre réseau ou à une constellation spécifique de localisation, par exemple de type GPS, auquel cas l'émetteur/récepteur mobile MOB détermine lui-même sa position par mesures temporelles et rend compte périodiquement de sa position à son infrastructure de gestion. Dans tous les cas, les coordonnées de l'émetteur/récepteur mobile MOB sont destinées à être comparées avec des contours prédéterminés des zones dans lesquelles les différents réseaux de communication NW2, NW3, NW4 et NW5 sont opérationnels. L'émetteur/récepteur MOB sera identifié comme apte à communiquer avec le réseau NW2 si ses coordonnées sont incluses dans une surface A2 définie par le contour correspondant. L'infrastructure pourra alors adresser un message d'information de façon sélective à l'émetteur/récepteur MOB ainsi identifié, ce qui aura pour effet de ne pas perturber les autres émetteurs/récepteurs tributaires du premier réseau de communication NW1.

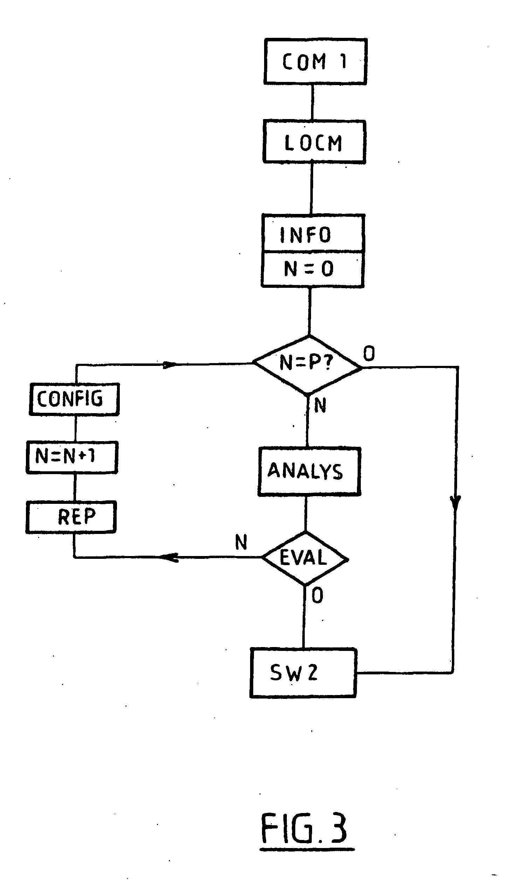

La Fig.3 est un organigramme qui illustre le déroulement d'un procédé conforme à un mode de mise en oeuvre particulier de l'invention.

Dans une étape initiale COM1 de ce procédé, un émetteur/récepteur mobile est configuré pour communiquer avec un premier réseau de communication.

Dans une étape suivante LOCM, dite de localisation et d'identification, ledit émetteur/récepteur est identifié comme étant également apte, du fait de sa situation géographique, à communiquer avec un deuxième réseau de communication.

Dans une étape suivante d'information INFO, l'émetteur/récepteur identifié à l'issue de l'étape de localisation et d'identification reçoit, par exemple de la part d'une infrastructure de gestion du premier réseau de communication, un message décrivant des caractéristiques propres au deuxième réseau de communication qui est opérationnel dans le lieu où ledit émetteur/récepteur a été localisé.

Dans une étape suivante d'analyse de configuration ANALYS, l'émetteur/récepteur identifié analyse sa propre configuration.

Dans une étape de test EVAL suivante, ledit émetteur/récepteur évalue si cette configuration est en adéquation avec les caractéristiques propres au deuxième réseau de communication. Si tel n'est pas le cas, l'émetteur/récepteur envoie au cours d'une étape suivante REP un rapport à l'infrastructure pour signifier à celle-ci qu'un basculement vers le deuxième réseau de communication n'est pas possible. Dans une étape suivante de reconfiguration CONFIG, l'émetteur/récepteur considéré tente alors d'adapter sa configuration aux caractéristiques propres du deuxième réseau de communication, par exemple en modifiant la configuration de ses parties radio, ou encore en enjoignant à un utilisateur dudit émetteur/récepteur de déployer une antenne nécessaire à des échanges de signaux avec ledit deuxième réseau. Cette étape est suivie d'une nouvelle étape d'analyse de configuration ANALYS, puis d'une nouvelle étape de test EVAL, à l'issue de laquelle, si la configuration de l'émetteur/récepteur considéré à été adaptée avec succès aux caractéristiques propres au deuxième réseau de communication, l'émetteur/récepteur signale à l'infrastructure qu'il est prêt à mettre fin à sa liaison avec le premier réseau de communication et à entrer effectivement en relation avec le deuxième réseau de communication au cours d'une étape SW2. Dans une variante de cette étape SW2, l'émetteur/récepteur pourra directement basculer vers le deuxième réseau de communication sans avertissement préalable à destination de l'infrastructure.

Si, par contre, la nouvelle configuration de l'émetteur/récepteur n'est toujours pas compatible avec les caractéristiques propres au deuxième réseau, l'émetteur/récepteur ne bascule toujours pas vers le deuxième réseau de communication et envoie au cours d'une nouvelle étape REP un nouveau rapport à l'infrastructure pour l'informer de cet état de fait.

Dans certaines situations, un basculement vers le deuxième réseau de communication peut devenir nécessaire sous peine de perdre la communication, par exemple du fait que le premier réseau est saturé. On peut donc aménager une possibilité de forcer l'émetteur/récepteur à basculer vers le deuxième réseau de communication au bout d'un nombre P prédéterminé de reconfigurations. A cet effet, le procédé selon le mode de mise en oeuvre particulier décrit ici prévoit une initialisation à zéro d'un compteur (N=0) lors de l'étape d'information INFO, ledit compteur étant incrémenté (N=N+1) avant chaque étape de reconfiguration CONFIG. Avant chaque étape d'analyse de configuration ANALYS, le contenu du compteur est comparé au nombre P prédéterminé. En cas d'égalité, l'émetteur/récepteur est automatiquement mis en relation avec le deuxième réseau de communication au cours d'une étape SW2. Autrement dit, l'émetteur/récepteur identifié peut refuser ou retarder un basculement vers le deuxième réseau de communication à P reprises, mais devra obtempérer à la (P+1)ème sollicitation, quitte à ce qu'une communication en cours soit interrompue faute d'adéquation de la configuration dudit émetteur/récepteur avec les caractéristiques propres au deuxième réseau de communication.

Dans un mode de mise en oeuvre particulier de l'invention, on pourra, en choisissant P=0, imposer à l'émetteur/récepteur identifié comme étant apte à communiquer avec le deuxième réseau de communication de basculer immédiatement vers ledit deuxième réseau sans se soucier de sa configuration antérieure. Un tel choix risque cependant de provoquer l'interruption d'une communication en cours si ladite configuration antérieure n'est pas en parfaite adéquation avec les caractéristiques propres au deuxième réseau de communication.

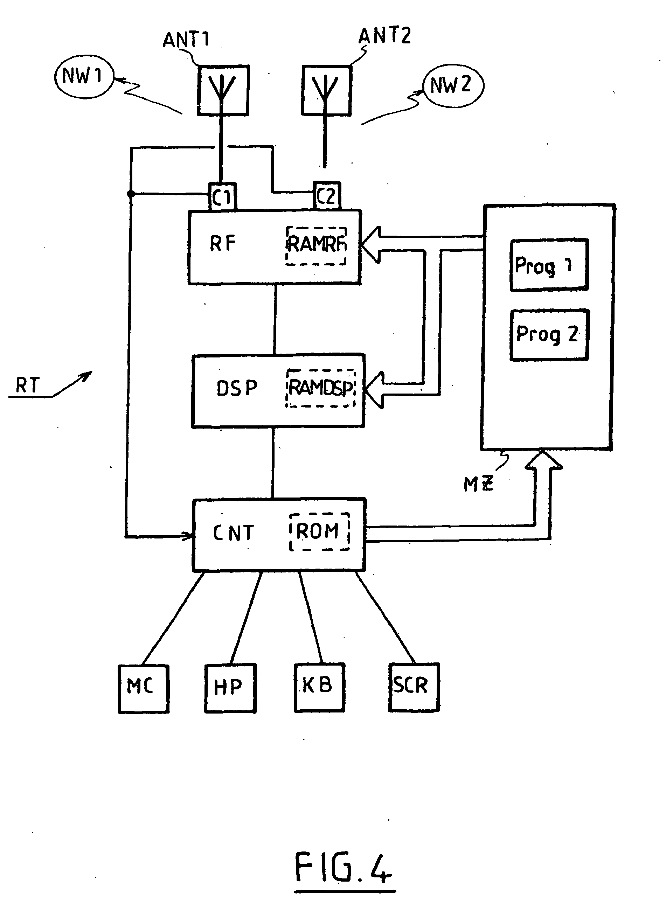

La Fig.4 représente schématiquement un mode de réalisation possible d'un radiotéléphone RT apte à remplir les fonctions d'un émetteur/récepteur mobile dans un procédé de transmission de données ou un système de traitement de données décrits ci-dessus. Ce radiotéléphone RT inclut un contrôleur principal CNT, typiquement construit sur la base d'un microprocesseur, destiné à assurer une gestion générale de diverses fonctionnalités du radiotéléphone RT, ainsi qu'une gestion d'une interface homme/machine grâce à laquelle un utilisateur peut communiquer avec le radiotéléphone RT, interface qui comprend dans cet exemple un clavier KB, un écran SCR, un microphone MC et un haut parleur HP. Le contrôleur principal CNT doit en outre assurer la gestion de couches hautes de protocoles de communication qui sont mémorisées dans une mémoire ROM qui lui est propre.

Le radiotéléphone RT inclut en outre un processeur de signal DSP, destiné à effectuer un traitement en bande de base de signaux émis ou reçus par le radiotéléphone RT. Le radiotéléphone RT inclut aussi une partie radio RF, adaptable par voie logicielle à différents réseaux de communication NW1, NW2 et à différentes bandes de fréquences associées, par chargement dans une mémoire RAMRF de la partie radio RF de modules logiciels Prog1, Prog2 correspondants, qui sont issus d'une mémoire MZ et contiennent des informations relatives aux caractéristiques propres auxdits réseaux NW1, NW2. Le radiotéléphone RT décrit ici peut recevoir deux antennes ANT1 et ANT2 adaptées chacune à l'un des réseaux NW1 ou NW2, antennes dont la mise en oeuvre par l'utilisateur du radiotéléphone peut être détectée par des capteurs de présence C1 et C2 des antennes ANT1 et ANT2.

Le fonctionnement du radiotéléphone RT peut être décrit de la manière suivante :
On supposera que, dans un premier temps, le radiotéléphone RT est en communication avec un premier réseau de communication NW1, une première antenne ANT1 étant alors active. Un premier module logiciel Prog1 est chargé dans la mémoire RAMRF de la partie radio RF, ainsi que dans une mémoire RAMDSP du processeur de signal DSP. Lorsque le radiotéléphone RT entre dans une zone où un deuxième réseau de communication NW2 est opérationnel, en plus du premier réseau NW1, un message envoyé par une infrastructure de gestion desdits réseaux via le premier réseau de communication NW1 avertit le radiotéléphone RT de cet état de fait. Ce message décrira des caractéristiques propres au deuxième réseau NW2 et contiendra éventuellement un module logiciel Prog2 pour pallier une possible absence dudit module de la zone mémoire MZ du radiotéléphone RT. Le module logiciel Prog2 ainsi reçu sera mémorisé sur ordre du contrôleur principl CNT dans ladite zone mémoire MZ.

Après réception de ce message, le radiotéléphone RT évalue si sa configuration est en adéquation avec les caractéristiques propres au deuxième réseau de communication NW2. En particulier, le contrôleur principal CNT sonde la zone mémoire MZ pour y vérifier la présence du module logiciel Prog2 nécessaire à une adaptation de la partie radio RF au deuxième réseau de communication NW2, et sonde sa propre mémoire ROM pour y rechercher les couches hautes de protocole qui correspondent audit deuxième réseau NW2, et observe l'état d'un capteur de présence C2 d'une deuxième antenne ANT2 nécessaire dans cet exemple à des échanges d'informations avec le deuxième réseau de communication NW2.

Le radiotéléphone RT procède ensuite à sa mise en adéquation avec les caractéristiques propres au deuxième réseau de communication NW2, étape au cours de laquelle le contrôleur principal CNT sélectionne pour lui-même les couches hautes de protocole adéquates, et ordonne le chargement du module logiciel Prog2 dans les mémoires RAMRF et RAMDSP de la partie radio RF et du processeur de signal DSP, respectivement. Si la deuxième antenne ANT2 est déclarée absente par le capteur de présence C2, l'étape de mise en adéquation peut inclure une sollicitation de l'utilisateur via l'interface homme/machine pour requérir de la part dudit utilisateur une connexion de la deuxième antenne ANT2. L'étape de mise en adéquation peut aussi inclure une génération, par le contrôleur principal CNT, d'une requête auprès d'un serveur, non représenté sur la figure et inclus dans le premier réseau de communication NW1, en vue d'un téléchargement du deuxième module logiciel Prog2 si celui-ci est absent de la zone mémoire MZ et n'a pas été inclus dans le message avertissant le radiotéléphone RT de l'existence d'un deuxième réseau de communication NW2 opérationnel dans le lieu où le radiotéléphone RT a été localisé.

A l'issue de cette étape de mise en adéquation, le radiotéléphone RT peut se connecter au deuxième réseau de communication NW2 dans des conditions optimales.

## Revendications

1. Procédé de transmission de données destiné à mettre en communication un réseau de communication, sélectionné parmi une pluralité de tels réseaux, avec au moins un émetteur/récepteur mobile, lesdits réseaux de communication possédant chacun des caractéristiques propres et différentes d'un réseau à un autre,
procédé **caractérisé en ce qu'**il inclut :
. une étape de localisation et de sélection d'un émetteur/récepteur rendu apte par sa situation géographique à communiquer avec au moins deux réseaux de communication différentes, et
. une étape de transmission, à un émetteur/récepteur identifié à l'issue de l'étape de localisation et d'identification, de caractéristiques propres à des réseaux de communication opérationnels dans le lieu où ledit émetteur/récepteur a été localisé.

2. Procédé de transmission de données selon la revendication 1, **caractérisé en ce qu'**il inclut en outre une étape d'analyse de configuration de l'émetteur/récepteur sélectionné à l'issue de l'étape de localisation et de sélection, et une étape d'évaluation d'une possible adéquation de ladite configuration avec les caractéristiques propres à des réseaux de communication opérationnels dans le lieu où ledit émetteur/récepteur a été localisé.

3. Procédé de transmission de données selon l'une des revendications 1 ou 2, **caractérisé en ce qu'**il inclut en outre une étape d'adaptation de configuration de l'émetteur/récepteur sélectionné à l'issue de l'étape de localisation et de sélection, laquelle étape d'adaptation est destinée à mettre ledit émetteur/récepteur en adéquation avec au moins un réseau de communication opérationnel dans le lieu où ledit émetteur/récepteur a été localisé et distinct d'un réseau avec lequel l'émetteur/récepteur est déjà en adéquation.

4. Procédé de transmission de données selon l'une des revendications 1 à 3, **caractérisé en ce que** l'étape de localisation et de sélection est réalisée par triangulation.

5. Système de télécommunication incluant au moins un émetteur/récepteur mobile destiné à être mis en communication avec un réseau de communication sélectionné parmi une pluralité de tels réseaux, lesdits réseaux de communication possédant chacun des caractéristiques propres et différentes d'un réseau à un autre, système **caractérisé en ce qu'**il inclut :
. des moyens de localisation et de sélection d'un émetteur/récepteur rendu apte par sa situation géographique à communiquer avec au moins deux réseaux de communication différents, et
. des moyens de transmission destinés à envoyer à un émetteur/récepteur sélectionné par les moyens de localisation et de sélection des caractéristiques propres à des réseaux de communication opérationnels dans le lieu où ledit émetteur/récepteur a été localisé.

6. Système de télécommunication selon la revendication 5, **caractérisé en ce qu'**il inclut en outre des moyens d'analyse de configuration de l'émetteur/récepteur sélectionné à l'issue de l'étape de localisation et de sélection, et des moyens d'évaluation d'une possible adéquation de ladite configuration avec les caractéristiques propres à des réseaux de communication opérationnels dans le lieu où ledit émetteur/récepteur a été localisé.

7. Système de télécommunication selon l'une des revendications 5 ou 6, **caractérisé en ce qu'**il inclut en outre des moyens d'adaptation de configuration de l'émetteur/récepteur sélectionné à l'issue de l'étape de localisation et de sélection, lesquels moyens d'adaptation sont destinés à mettre ledit émetteur/récepteur en adéquation avec au moins un réseau de communication opérationnel dans le lieu où ledit émetteur/récepteur a été localisé et distinct d'un réseau avec lequel l'émetteur/récepteur est déjà en adéquation.

8. Système de télécommunication selon l'une des revendications 5 à 7, **caractérisé en ce que** les moyens de localisation et de sélection incluent trois stations de base appartenant auxdits réseaux pour déterminer par triangulation une position dudit émetteur/récepteur.

9. Système de télécommunication selon l'une des revendications 5 à 7, **caractérisé en ce que** les moyens de localisation et de sélection incluent trois satellites pour déterminer par triangulation une position dudit émetteur/récepteur.

10. Radiotéléphone apte à communiquer avec un réseau de communication, sélectionné parmi une pluralité de tels réseaux, lesdits réseaux de communication possédant chacun des caractéristiques propres et différentes d'un réseau à un autre, dans un système de communication comprenant des moyens de localisation et de sélection d'un émetteur/récepteur rendu apte par sa situation géographique à communiquer avec au moins deux réseaux de communication différents,
**caractérisé en ce qu'**il comporte des moyens de recevoir, lorsqu'il est sélectionné par lesdits moyens de localisation et de sélection, des caractéristiques propres à des réseaux de communication opérationnels dans le lieu où ledit émetteur/récepteur a été localisé.

## Patentansprüche

1. Datenübertragungsverfahren zum Setzen eines Kommunikationsnetzwerkes, das aus einer Vielzahl von solchen Netzwerken ausgewählt wird, in Verbindung mit mindestens einem mobilen Sender/Empfänger, wobei die Kommunikationsnetzwerke jeweils spezifische Eigenschaften aufweisen, sowie Eigenschaften, die sich von einem Netzwerk zum anderen unterscheiden, wobei das Verfahren **dadurch gekennzeichnet ist, dass** es Folgendes umfasst:
- einen Schritt des Lokalisierens und des Auswählens eines Senders/Empfängers, der aufgrund seiner geografischen Lage in der Lage ist, mit mindestens zwei unterschiedlichen Kommunikationsnetzwerken zu kommunizieren, und
- einen Schritt des Sendens an einen nach dem Schritt des Lokalisierens und Identifizierens identifizierten Senders/Empfängers von Eigenschaften, die für Kommunikationsnetzwerke spezifisch sind, die an dem Ort, an welchem der Sender/Empfänger lokalisiert wurde, betriebsbereit sind.

2. Datenübertragungsverfahren nach Anspruch 1, **dadurch gekennzeichnet, dass** es weiterhin einen Schritt des Analysierens einer Konfiguration des nach dem Schritt des Lokalisierens und des Auswählens ausgewählten Senders/Empfängers und einen Schritt des Schätzens einer möglichen Entsprechung der Konfiguration mit den Eigenschaften umfasst, die für Kommunikationsnetzwerke spezifisch sind, die an dem Ort, an welchem der Sender/Empfänger lokalisiert wurde, betriebsbereit sind.

3. Datenübertragungsverfahren nach einem der Ansprüche 1 oder 2, **dadurch gekennzeichnet, dass** es weiterhin einen Schritt des Anpassens der Konfiguration des nach dem Schritt des Lokalisierens und Auswählens ausgewählten Senders/Empfängers umfasst, wobei der Schritt des Anpassens dazu bestimmt ist, den Sender/Empfänger in Entsprechung mit mindestens einem Kommunikationsnetzwerk zu versetzen, das an dem Ort, an welchem der Sender/Empfänger lokalisiert wurde, betriebsbereit ist und sich von einem Netzwerk unterscheidet, mit welchem der Sender/Empfänger bereits in Entsprechung steht.

4. Datenübertragungsverfahren nach einem der Ansprüche 1 bis 3, **dadurch gekennzeichnet, dass** der Schritt des Lokalisierens und Auswählens mittels Triangulation durchgeführt wird.

5. Telekommunikationssystem umfassend mindestens einen mobilen Sender/Empfänger, der dazu eingerichtet ist, in Verbindung mit einem Kommunikationsnetzwerk gesetzt zu werden, das aus einer Vielzahl von solchen Netzwerken ausgewählt wird, wobei die Kommunikationsnetzwerke jeweils spezifische Eigenschaften aufweisen, sowie Eigenschaften, die sich von einem Netzwerk zum anderen unterscheiden, wobei das System **dadurch gekennzeichnet ist, dass** es Folgendes umfasst:
- Mittel zum Lokalisieren und Auswählen eines Senders/Empfängers, der aufgrund seiner geografischen Lage in der Lage ist, mit mindestens zwei unterschiedlichen Kommunikationsnetzwerken zu kommunizieren, und
- Übertragungsmittel zum Senden an einen durch die Mittel zum Lokalisieren und Auswählen ausgewählten Sender/Empfänger von Eigenschaften, die für Kommunikationsnetzwerke spezifisch sind, die an dem Ort, an welchem der Sender/Empfänger lokalisiert wurde, betriebsbereit sind.

6. Telekommunikationssystem nach Anspruch 5, **dadurch gekennzeichnet, dass** es weiterhin Mittel zum Analysieren einer Konfiguration des nach dem Schritt des Lokalisierens und Auswählens ausgewählten Senders/Empfängers und Mittel zum Schätzen einer möglichen Entsprechung der Konfiguration mit den Eigenschaften umfasst, die für Kommunikationsnetzwerke spezifisch sind, die an dem Ort, an welchem der Sender/Empfänger lokalisiert wurde, betriebsbereit sind.

7. Telekommunikationssystem nach einem der Ansprüche 5 oder 6, **dadurch gekennzeichnet, dass** es weiterhin Mittel zum Anpassen der Konfiguration des nach dem Schritt des Lokalisierens und Auswählens ausgewählten Senders/Empfängers umfasst, wobei die Mittel zum Anpassen dazu eingerichtet sind, den Sender/Empfänger in Entsprechung mit mindestens einem Kommunikationsnetzwerk zu setzen, das an dem Ort, an welchem der Sender/Empfänger lokalisiert wurde, betriebsbereit ist und sich von einem Netzwerk unterscheidet, mit welchem der Sender/Empfänger bereits in Entsprechung ist.

8. Telekommunikationssystem nach einem der Ansprüche 5 bis 7, **dadurch gekennzeichnet, dass** die Mittel zum Lokalisieren und Auswählen drei den Netzwerken angehörende Basisstationen zum Bestimmen durch Triangulation einer Position des Senders/Empfängers umfassen.

9. Telekommunikationssystem nach einem der Ansprüche 5 bis 7, **dadurch gekennzeichnet, dass** die Mittel zum Lokalisieren und Auswählen drei Satelliten zum Bestimmen durch Triangulation einer Position des Senders/Empfängers umfassen.

10. Funktelefon, das in der Lage ist, mit einem Kommunikationsnetzwerk zu kommunizieren, das aus einer Vielzahl von solchen Netzwerken ausgewählt wird, wobei die Kommunikationsnetzwerke jeweils spezifische Eigenschaften aufweisen, sowie Eigenschaften, die sich von einem Netzwerk zum anderen unterscheiden, in einem Kommunikationssystem umfassend Mittel zum Lokalisieren und Auswählen eines Senders/Empfängers, der aufgrund seiner geografischen Lage in der Lage ist, mit mindestens zwei unterschiedlichen Kommunikationsnetzwerken zu kommunizieren,
**dadurch gekennzeichnet, dass** es Mittel zum Empfangen, wenn es durch die Mittel zum Lokalisieren und Auswählen ausgewählt wird, von Eigenschaften umfasst, die für Kommunikationsnetzwerke spezifisch sind, die an dem Ort, an welchem der Sender/Empfänger lokalisiert wurde, betriebsbereit sind.

## Claims

1. Method of transmitting data for connecting a communication network, which is selected among a plurality of such networks, with at least one mobile transmitter/receiver, said communication networks each having specific characteristics and characteristics that differ from one network to another, said method being **characterized in that** it includes:
• a step of localizing and selecting a transmitter/receiver that is able, due to its geographic situation, to communicate with at least two different communication networks, and
• a step of transmitting characteristics that are specific to communication networks being operational at the location where said transmitter/receiver has been localized to a transmitter/receiver that has been identified upon completion of the localization and identification step.

2. Method of transmitting data according to claim 1, **characterized in that** it further comprises a step of analyzing a configuration of the selected transmitter/receiver upon completion of the localization and selection step, and a step of evaluating a possible compliance of said configuration with the characteristics that are specific to communication networks being operational at the location where said transmitter/receiver has been localized.

3. Method of transmitting data according to one of claims 1 or 2, **characterized in that** it further includes a step of adapting a configuration of the transmitter/receiver that has been selected upon completion of the localization and selection step, wherein the adaptation step is intended to bring said transmitter/receiver in compliance with at least one communication network being operational at the location where said transmitter/receiver has been localized and that is distinct from a network with which the transmitter/receiver is already in compliance.

4. Method of transmitting data according to one of claims 1 to 3, **characterized in that** the localization and selection step is realized by triangulation.

5. Telecommunication system including at least one mobile transmitter/receiver that is configured to be connected with a communication network that has been selected among a plurality of such networks, said communication networks each having specific characteristics and characteristics that differ from one network to another, the system being **characterized in that** it includes:
• means for localizing and selecting a transmitter/receiver that is able, due to its geographic situation, to communicate with at least two different communication networks, and
• transmission means for transmitting characteristics that are specific to communication networks being operational at the location where said transmitter/receiver has been localized to a transmitter/receiver that has been selected by the localization and selection means.

6. Telecommunication system according to claim 5, **characterized in that** it further includes means for analyzing a configuration of the transmitter/receiver that has been selected upon completion of the localization and selection step, and means for evaluating a possible compliance of said configuration with the characteristics that are specific to communication networks being operational at the location where said transmitter/receiver has been localized.

7. Telecommunication system according to one of claims 5 or 6, **characterized in that** it further includes means for adapting a configuration of the transmitter/receiver that has been selected upon completion of the localization and selection step, said adaptation means being configured to bring said transmitter/receiver in compliance with at least one communication network being operational at the location where said transmitter/receiver has been localized and that is distinct from a network with which the transmitter/receiver is already in compliance.

8. Telecommunication system according to one of claims 5 to 7, **characterized in that** the localization and selection means include three base stations belonging to said networks for determining by triangulation a position of said transmitter/receiver.

9. Telecommunication system according to one of claims 5 to 7, **characterized in that** the localization and selection means include three satellites for determining by triangulation a position of said transmitter/receiver.

10. Radio telephone capable of communicating with a communication network that has been selected among a plurality of such networks, said communication networks each having specific characteristics and characteristics that differ from one network to another, in a communication system comprising means for localizing and selecting a transmitter/receiver that is able, due to its geographic situation, to communicate with at least two different communication networks,
**characterized in that** it comprises means for receiving, when it is selected by said localization and selection means, characteristics that are specific to communication networks being operational at the location where said transmitter/receiver has been localized.
